# EUROPÄISCHE PATENTSCHRIFT

(11) **EP 1 832 383 B1**
(45) Veröffentlichungstag und Bekanntmachung des Hinweises auf die Patenterteilung: **08.10.2008**
(21) Anmeldenummer: 07004256.9
(22) Anmeldetag: 01.03.2007
(51) Int. Cl.: B23Q 1/62, B23Q 1/00, B24B 5/04

(54) **Werkzeugmaschine**
Machine tool
Machine-outil

(30) Priorität: 10.03.2006 DE 102006011551
(43) Veröffentlichungstag der Anmeldung: 12.09.2007
(73) Patentinhaber: Haas Schleifmaschinen GmbH, 78647 Trossingen (DE)
(72) Erfinder: Braun, Hans-Dieter, 78665 Frittlingen (DE); Bader, Thomas, 78559 Gosheim (DE); Kern, Tim, 78166 Donauschingen (DE); Geiger, Winfried, 78048 Villingen-Schwenningen (DE); Holzer, Harald, 79868 Feldberg (DE)
(74) Vertreter: Mussgnug, Bernd

(56) Entgegenhaltungen:
- EP-A- 0 320 498
- EP-A- 1 366 852
- US-B1- 6 232 736

## Beschreibung

Die Erfindung betrifft eine Werkzeugmaschine zur Bearbeitung von Werkstücken mit drei zueinander orthogonalen NC-gesteuerten linearen Achsen.

Für die Bearbeitung von Werkstücken, insbesondere für die Feinbearbeitung in Schleifmaschinen, wird der Form der zu bearbeitenden Werkstücke durch die Anzahl und Anordnung der geregelt steuerbaren Achsen Rechnung getragen. Für das Rundschleifen rotationssymmetrischer Werkstücke sind analog zu den einfachen Drehmaschinen zwei lineare Achsen ausreichend, die zusammen mit einer rotativen Achse des Werkstückes und der rotierenden Werkzeugspindel rotationssymmetrische Konturen erzeugen können. Für die Bearbeitung, insbesondere die Schleifbearbeitung von Werkstücken, die nicht rotationssymmetrisch zur Mittelachse des Werkstückes ausgebildet sind, werden in der Regel Werkzeugmaschinen eingesetzt, die drei zueinander orthogonale lineare Achsen aufweisen, die die Werkzeugspindel räumlich relativ zum Werkstück positionieren, und zwei rotative Achsen, die die Position des Werkzeuges, insbesondere des Schleifwerkzeuges, am Werkzeugeingriffspunkt in zwei weiteren Anstellwinkeln bezüglich des Werkstückes bestimmen. In besonderen Fällen wird zur Herstellung von Freiformflächen aus Gründen der Erreichbarkeit der Bearbeitungsstelle mit den Hauptachsen der Werkzeugmaschine zusätzlich eine dritte rotative Achse verwendet.

Der technische Aufwand beim Aufbau einer solchen Werkzeugmaschine wächst mit der Anzahl der während der Bearbeitung miteinander zusammenwirkenden Achsen. Die linearen Achsen müssen in ihrer gegenseitigen Orthogonalität und die rotativen Achsen in ihrer Achslage bezüglich der linearen Achsen mit höchster Präzision ausgerichtet sein. Eine solche Präzision kann bei dem Bau und der Einstellung der Maschine mit den notwendigen Toleranzen eingehalten werden. Schwieriger sind jedoch solche Abweichungen beherrschbar, die bei dem Betrieb der Werkzeugmaschine auftreten. Solche Abweichungen können thermisch durch unterschiedliche Erwärmung einzelner Bereiche der Maschine und auch durch Deformationen unter dem Einfluss unterschiedlicher Werkstückgewichte oder Bearbeitungskräfte verursacht werden. Solche Fehler können nur näherungsweise durch Messung und Korrektur kompensiert werden. Dies führt zu umso besseren Ergebnissen, je weniger Achsen von den betriebsbedingten Einflüssen betroffen sind. Insbesondere ist eine solche Kompensation dann möglich, wenn stets die gleichen Werkstücke bearbeitet werden. Bei einer größeren Anzahl von Achsen und einer universellen Anwendung für unterschiedliche Werkstücke ist eine solche Fehlerkorrektur kaum durchführbar.

Bei den bekannten Werkzeugmaschinen sind in der Regel der Werkstückträger und der Werkzeugträger einseitig und außermittig durch einen Maschinenständer miteinander verbunden. Ein solcher Ständer reagiert auf eine einseitige Erwärmung oder auf eine Belastung grundsätzlich mit einer Verbiegung. Diese Situation ist bei Portalmaschinen, z.B. bei Gantry-Maschinen dadurch günstiger, dass sich die Ständeranordnung beidseitig des Bearbeitungsraumes und symmetrisch zu einer Ausdehnung der Maschine befindet. Dabei liegen alle drei linearen Achsen in einer die Werkzeugspindel tragenden Brücke. Diese Brücke wird zwar symmetrisch beiderseits der Bearbeitungsstelle abgestützt, die Werkzeugspindel ist jedoch in der Brücke zwischen den Abstützungspunkten verfahrbar, so dass hierdurch wiederum asymmetrische Gewichtskräfte und Bearbeitungskräfte entstehen können. Auch eine asymmetrische thermische Belastung der Brücke kann nicht ausgeschlossen werden.

Aus der DE 42 12 175 A1 ist eine Drehmaschine bekannt, bei welcher ein Maschinenbett zwei in der X-Achse beabstandete vertikal nach oben gerichtete Seitenwangen aufweist, auf welchen eine Brücke in der Y-Achse verfahrbar ist. An dieser Brücke ist mittels eines Kreuzschlittens die Werkstückspindel in der horizontalen X-Achse und der vertikalen Z-Achse verfahrbar. Das Werkzeug ist ortsfest am Maschinenbett angeordnet. Das Gewicht der Werkstückspindel und des Werkstückes sowie die Bearbeitungskräfte wirken an der Brücke in der Y-Richtung asymmetrisch an und ihr Angriffspunkt an der Brücke verlagert sich in der X-Richtung während des Bearbeitungsvorganges.

Der Erfindung liegt die Aufgabe zugrunde, eine Werkzeugmaschine zur Bearbeitung von Werkstücken zu schaffen, bei welcher Bearbeitungsfehler durch thermische Einflüsse und/oder Gewichtskräfte und Bearbeitungskräfte während des Betriebs der Maschine minimiert werden.

Diese Aufgabe wird erfindungsgemäß gelöst durch eine Werkzeugmaschine mit den Merkmalen des Patentanspruchs 1.

Vorteilhafte Ausführungen der Erfindung sind in den Unteransprüchen angegeben.

Die erfindungsgemäße Werkzeugmaschine zur Bearbeitung von Werkstücken ist vorzugsweise als Schleifmaschine ausgebildet.

Um Fehler verursachende Verformungen durch thermische Einflüsse und durch Gewichtskräfte und Bearbeitungskräfte minimal zu halten, ist bei der erfindungsgemäßen Werkzeugmaschine darauf Wert gelegt, dass sowohl der Aufbau der Werkzeugmaschine als auch die während des Betriebs auftretenden Kräfte möglichst mittensymmetrisch ausgebildet sind. Die Werkzeugspindel ist an einer Brücke angeordnet, die in der Y-Achse verfahrbar ist. In dieser Brücke ist die Werkzeugspindel bezüglich der X-Achse mittensymmetrisch angeordnet. In der X-Achse ist die Werkzeugspindel nicht verfahrbar, so dass sie stets in dieser mittigen Anordnung in der Brücke verbleibt. Die X-Achse für die Bearbeitung ist als Werkstück-Trägerachse ausgebildet und auf dem Maschinenbett angeordnet, auf welchem die X-Führungseinheit für die Werkstückträgereinrichtung massiv unterstützt wird, so dass Werkstückgewicht und auf das Werkstück einwirkende Bearbeitungskräfte zu keiner Verformung führen.

Wird die Werkzeugmaschine zusätzlich zu den drei orthogonalen linearen Achsen noch mit rotativen Achsen ausgestattet, wie dies insbesondere für universell einsetzbare Schleifmaschinen vorteilhaft ist, so werden auch diese rotativen Achsen so angeordnet, dass diese die gesamte Mittensymmetrie der Werkzeugmaschine möglichst wenig beeinträchtigen.

Eine rotative Achse, die sogenannte C-Achse, ist mit der vertikalen Z-Achse zusammenfallend ausgebildet. Die Werkzeugspindel kann mit ihrer die Z-Achse schneidenden Achse um diese C-Achse gedreht werden, um den Anstellwinkel des Werkzeuges bezüglich des Werkstückes gesteuert einzustellen.

Die drehbare Lagerung der C-Achse ist in die Brücke integriert, wozu der Z-Schlitten in der Brücke um diese C-Achse drehbar gelagert ist. Der Z-Schlitten ist in der C-Achse und aus Symmetriegründen vorzugsweise koaxial mittig in der C-Achse vertikal verfahrbar. Die Masse der rotativen C-Achse wird dadurch reduziert, da hierfür kein gesondertes Achsengehäuse erforderlich ist. Die Masse der rotativen C-Achse muss außerdem nicht vertikal bewegt werden. Die Führung und der Antrieb des Z-Schlittens können dabei um die C-Achse mitgedreht werden, so dass die unten an den Z-Schlitten angebaute Werkzeugspindel stets die gleiche relative Lage in Bezug auf den Z-Schlitten beibehält. Eine koaxial verschiebbare drehbare Spindel ist z.B. aus der DE 198 58 667 A1 bekannt.

In einer vorteilhaften Ausführung sind in den Seitenwangen des Maschinenbettes Durchbrüche vorgesehen, durch welche die auf dem Maschinenbett angeordnete X-Führung hindurch geführt ist. Dadurch ist es möglich, einen großen Verfahrweg in der X-Achse z.B. für in dieser Achse langgestreckte Werkstücke zur Verfügung zu stellen, ohne dass der lichte Abstand in X-Richtung für die die Brücke tragenden Y-Führungen entsprechend vergrößert werden müsste. Die Abstützung der oben auf den Seitenwangen fahrenden Massen der Brücke und der Werkzeugspindel verteilt sich dabei mittensymmetrisch auf vier Säulen, nämlich jeweils die beiderseits des Durchbruchs verbleibenden zwei Säulen jeder Seitenwange. Ohne den Maschinenaufbau ändern zu müssen, können bei dieser Ausführung die Maschinenabmessungen in der X-Achse entsprechend der jeweiligen Bearbeitungsaufgabe verlängert werden.

Um auch die Abstützung der Brücke in ihrer Y-Verfahrrichtung nicht asymmetrisch zu belasten, ist vorzugsweise der Z-Schlitten, der die Werkzeugspindel trägt, in Bezug auf diese Y-Achse mittig in der Brücke angeordnet. Dadurch treten unabhängig von dem Gewicht der Werkzeugspindel und von den auf die Werkzeugspindel wirkenden Bearbeitungskräften keine Kippmomente auf die Brücke und ihre Y-Führung auf.

Um Werkstücke bearbeiten zu können, die zumindest teilweise rotationssymmetrisch sind und die ggf. in dieser Rotationsachse langgestreckt sind, ist vorzugsweise eine rotative Achse, die sogenannte A-Achse mit der X-Achse zusammenfallend ausgebildet. Dies bedeutet, dass das Werkstück in der Werkstückspanneinrichtung um diese mit der linearen X-Achse zusammenfallende A-Achse drehbar ist. Die jeweils zu bearbeitende Stelle des Werkstückes kann mittels der A-Achse dem bearbeitenden Werkzeug zugedreht werden. Die Positionierung des Werkstückes in der X-Achse gewährleistet dabei, dass diese Bearbeitungsstelle stets mittig in der Maschine zwischen den Seitenwangen positioniert wird.

Eine dritte rotative Achse kann dadurch realisiert werden, dass die Werkzeugspindel um eine horizontale Achse, die sogenannte B-Achse, schwenkbar gelagert ist, die in einer zur Z-Achse orthogonalen Ebene liegt.

Vorzugsweise ist die Werkzeugspindel so an dem Z-Schlitten angeordnet, dass ein in der Werkzeugspindel gespanntes Werkzeug axial mit der Z-Achse und insbesondere mit der rotativen C-Achse fluchtet. Dadurch kann der Anstellwinkel des Werkzeuges in der C-Achse und ggf. in der B-Achse geändert werden, ohne dass die Bearbeitungsstelle, d.h. die Angriffsstelle des Werkzeuges an dem Werkstück aus der mittigen Position in der Maschine wandert.

Vorteilhaft ist es, das Maschinenbett und die Seitenwangen einstückig als Mineralgussbauteile auszubilden. Dadurch ergibt sich ein wesentlich langsamerer und gleichmäßiger Wärmegang und eine hohe Schwingungsdämpfung des Maschinenbettes ist gewährleistet.

Im Folgenden wird die Erfindung anhand eines in der Zeichnung dargestellten Ausführungsbeispiels näher erläutert. Es zeigen:

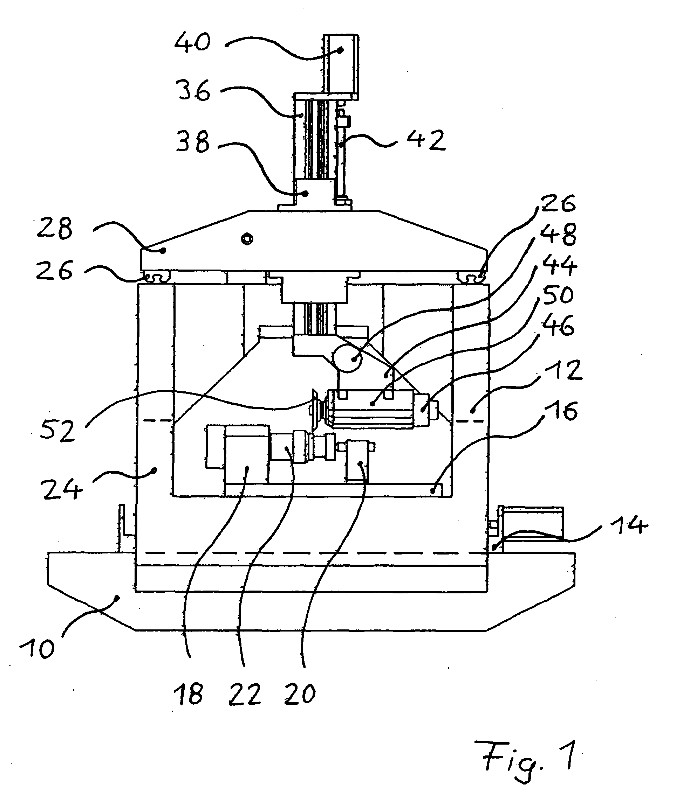

- Figur 1: eine Frontansicht der Werkzeugmaschine und

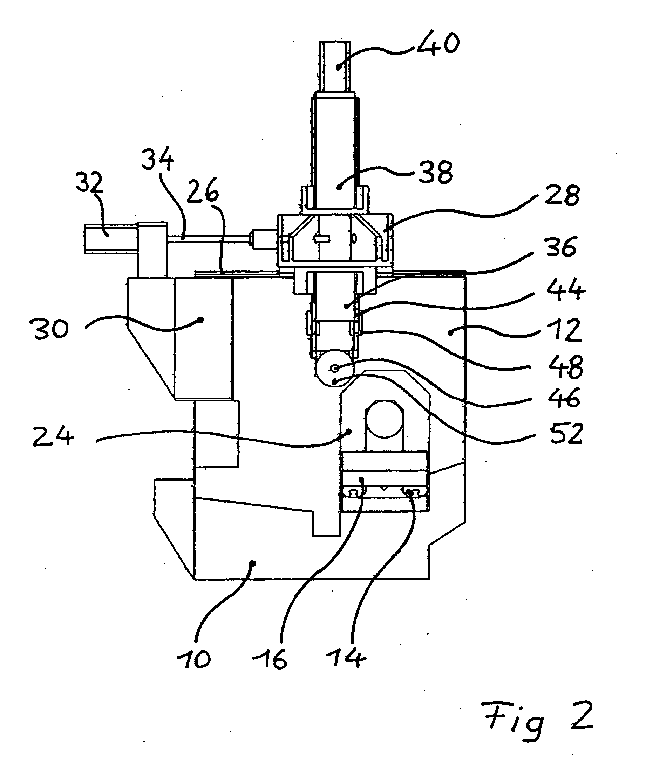

- Figur 2: eine Seitenansicht im Vertikalschnitt.

In dem in der Zeichnung dargestellten Ausführungsbeispiel ist eine Werkzeugmaschine gezeigt, die als Schleifmaschine ausgebildet ist.

Die Werkzeugmaschine weist ein Maschinenbett 10 auf, welches sich in der Richtung der X-Achse erstreckt. An den beiden in der X-Richtung voneinander beabstandeten Enden des Maschinenbettes 10 sind jeweils vertikal nach oben gerichtete Seitenwangen 12 angeordnet. Das Maschinenbett 10 und die Seitenwangen 12 sind einstückig als Mineralgussbauteile hergestellt.

Auf der Oberseite des Maschinenbettes 10 ist eine horizontal in der X-Achse verlaufende X-Führungseinheit 14 befestigt, die über ihre gesamte Länge durch das Maschinenbett 10 abgestützt wird. Auf der X-Führungseinheit ist NC-gesteuert in der X-Achse verfahrbar eine Werkstückträgereinrichtung angeordnet. Die Werkstückträgereinrichtung besteht im dargestellten Beispiel aus einem auf der X-Führungseinheit 14 verschiebbar gelagerten Werkstücktisch 16, auf welchem eine Werkstückspanneinheit 18 und ein Reitstock 20 angeordnet sind. Ein Werkstück 22 kann mit in X-Richtung verlaufender Achse in der Werkstückspanneinheit 18 gespannt werden und wird an seinem entgegengesetzten Ende durch den Reitstock abgestützt. Die Werkstückspanneinheit 18 weist einen Drehantrieb, die sogenannte A-Achse auf, durch welchen das Werkstück 22 um seine zur X-Achse parallele Achse NC-gesteuert drehbar ist.

Die beiden Seitenwangen 12 weisen in ihrem an das Maschinenbett 10 anschließenden unteren Bereich jeweils einen Durchbruch 24 auf. Die Durchbrüche 24 fluchten mit der X-Führungseinheit 14 und sind in der zur X-Achse senkrechten horizontalen Y-Richtung symmetrisch zu der X-Führung ausgebildet. Die X-Führungseinheit kann durch die Durchbrüche 24 hindurchragen, so dass auch in X-Richtung langgestreckte Werkstücke 22 in der Werkstückträgereinrichtung aufgenommen und durch die Durchbrüche 24 hindurchgeführt werden können, deren linearer Verfahrweg in der X-Richtung größer ist als der lichte Innenabstand der Seitenwangen 12.

Auf den oberen horizontalen in Y-Richtung verlaufenden Randflächen der Seitenwangen 12 sind Y-Führungen 26 angebracht. Auf diesen Y-Führungen 26 ist in der Y-Achse verfahrbar eine Brücke 28 gelagert. Die Brücke 28 überspannt den Innenraum der Maschine zwischen den Seitenwangen 12 in der X-Richtung und versteift die Seitenwangen 12 an ihren freien oberen Rändern in X-Richtung gegeneinander. Die Brücke 28 ist mittels eines an einer Maschinenrückwand 30 angeordneten Antriebsmotors 32 und einer Spindel 34 in der Y-Achse NC-gesteuert verfahrbar.

Flächenmittig, d.h. sowohl in Bezug auf die X-Richtung als auch in Bezug auf die Y-Richtung mittig in der Brücke 28 ist ein Z-Schlitten 36 vorgesehen. Der Z-Schlitten 36 ist in einer Hülse 38 in der vertikalen Z-Achse geführt. In der Hülse 38 ist der Z-Schlitten mittels eines Antriebsmotors 40 und einer Spindel 42 NC-gesteuert vertikal verfahrbar. Die Hülse 38 ist in der Brücke 28 axial unverschiebbar und um eine vertikale Achse NC-gesteuert drehbar gelagert. Diese vertikale Drehachse der Hülse 38, die sogenannte C-Achse fällt mit der Z-Achse zusammen.

An dem nach unten aus der Hülse 38 und der Brücke 28 herausragenden Ende des Z-Schlittens ist ein radial abstehender Bügel 44 befestigt. An diesem Bügel 44 ist eine Werkzeugspindel 46 über ein Schwenkgelenk 48 schwenkbar gelagert. Die Schwenkachse des Schwenkgelenkes 48 verläuft außermittig zu der Z-Achse bzw. der C-Achse in einer zu der Z-Achse orthogonalen horizontalen Ebene. Die Schwenkachse des Schwenkgelenks 48 bildet eine dritte rotative Achse, die sogenannte B-Achse.

Die Werkzeugspindel 46 wird durch einen koaxialen Spindelmotor 50 angetrieben und weist an ihrem Ende eine Werkzeugaufnahme auf, in welcher ein Werkzeug 52, im dargestellten Ausführungsbeispiel ein Schleifwerkzeug, gespannt werden kann.

Zur Schleifbearbeitung des Werkstückes 22 wird dieses mit der Werkstückträgereinrichtung in der X-Achse positioniert, wobei die jeweils zu bearbeitende Stelle des Werkstückes 22 in der X-Achse mittig zwischen den Seitenwangen 12 positioniert wird. Das bearbeitende Werkzeug 52 wird mittels der Bewegung der Brücke 28 in der Y-Achse und mittels der Bewegung des Z-Schlittens 36 in der Z-Achse zugestellt. Durch Drehung des Werkstückes 22 um die A-Achse wird der zu bearbeitende Umfangsbereich des Werkstückes 22 dem Werkzeug 52 zugekehrt. Durch Drehung der Hülse 38 um die C-Achse wird die Achse der Werkzeugspindel 46 und damit des Werkzeuges 52 in der X-Y-Ebene positioniert. Durch Schwenken der Werkzeugspindel 46 um die B-Achse des Schwenkgelenkes 48 kann weiter der Neigungswinkel der Werkzeugspindel 46 und damit des Werkzeugs 52 in Bezug auf die X-Y-Ebene eingestellt werden. Durch die Anordnung des Schwenkgelenkes 48 und der Befestigung der Werkzeugspindel 46 außerhalb der Z-Achse wird erreicht, dass das Werkzeug 52 und damit die Bearbeitungsstelle an dem Werkstück 22 sich fluchtend in der Z-Achse bzw. der C-Achse befindet, unabhängig von der Rotation der Werkzeugspindel 46 um die C-Achse. Der lichte Abstand der Seitenwangen 12 in der X-Richtung erlaubt eine Drehung der horizontal angeordneten Werkzeugspindel 46 um die C-Achse um 360°.

### Bezugszeichenliste

- 10: Maschinenbett
- 12: Seitenwangen
- 14: X-Führungseinheit
- 16: Werkstücktisch
- 18: Werkstückspanneinheit
- 20: Reitstock
- 22: Werkstück
- 24: Durchbruch
- 26: Y-Führungen
- 28: Brücke
- 30: Maschinenrückwand
- 32: Antriebsmotor
- 34: Spindel
- 36: Z-Schlitten
- 38: Hülse
- 40: Antriebsmotor
- 42: Spindel
- 44: Bügel
- 46: Werkzeugspindel
- 48: Schwenkgelenk
- 50: Spindelmotor
- 52: Werkzeug.

## Patentansprüche

1. Werkzeugmaschine zur Bearbeitung von Werkstücken (22), mit drei zueinander orthogonalen NC-gesteu.erten linearen Achsen, nämlich einer horizontalen X-Achse, einer horizontalen Y-Achse und einer vertikalen Z-Achse, mit einem Maschinenbett (10), welches in der X-Achse beabstandet zwei vertikal nach oben gerichtete Seitenwangen (12) aufweist, mit einer oben an den Seitenwangen (12) in der Y-Achse geführt verfahrbaren Brücke (28), mit einem in Bezug auf die Seitenwangen (12) mittig in der Brücke (28) angeordneten Z-Schlitten, der in der Z-Achse verfahrbar ist und eine Werkzeugspindel (46) trägt, mit einer auf dem Maschinenbett (10) angeordneten X-Führungseinheit (14), mit einer auf der X-Führungseinheit verfahrbaren Werkstückträgereinrichtung (16, 18, 20) und mit einer an der Werkzeugspindel (46) angeordneten Werkzeugaufnahme,
**daduch gekennzeichnet**, **dass** die Achse der Werkzeugspindel (46) die Z-Achse schneidet und dass die Werkzeugspindel (46) um eine mit der Z-Achse zusammenfallende Achse (C-Achse) NC-gesteuert drehbar ist, wozu der Z-Schlitten (36) in der Brücke (28) um diese C-Achse drehbar gelagert ist.

2. Werkzeugmaschine nach Anspruch 1,
**dadurch gekennzeichnet, dass** die Seitenwangen (12) jeweils einen Durchbruch (24) aufweisen, durch welchen die X-Führungseiheit (14) hindurchgeführt ist.

3. Werkzeugmaschine nach Anspruch 1,
**dadurch gekennzeichnet, dass** der Z-Schlitten in der Brücke (28) auch in Bezug auf die Y-Achse mittig angeordnet ist.

4. Werkzeugmaschine nach einem der vorhergehenden Ansprüche,
**dadurch gekennzeichnet, dass** das Werkstück (22) in der Werkstückträgereinrichtung (16, 18, 20) NC-gesteuert um eine mit der X-Achse zusammenfallende A-Achse drehbar ist.

5. Werkzeugmaschine nach einem der vorhergehenden Ansprüche,
**dadurch gekennzeichnet, dass** die Werkzeugspindel (46) um eine horizontale B-Achse schwenkbar gelagert ist, die in einer zur Z-Achse orthogonalen Ebene liegt.

6. Werkzeugmaschine nach einer der vorhergehenden Ansprüche,
**dadurch gekennzeichnet, dass** ein in der Werkzeugaufnahme der Werkzeugspindel (46) gespanntes Werkzeug (52) sich im Wesentlichen in der Z-Achse befindet.

7. Werkzeugmaschine nach Anspruch 6,
**dadurch gekennzeichnet, dass** der lichte Abstand der Seitenwangen (12) in der X-Richtung eine Drehung der Werkzeugspindel um die C-Achse um 360° zulässt.

8. Werkzeugmaschine nach einem der vorhergehenden Ansprüche,
**dadurch gekennzeichnet, dass** das Maschinenbett (10) und die Seitenwangen (12) ein einstückiges Mineralgussbauteil bilden.

9. Werkzeugmaschine nach einem der vorhergehenden Ansprüche,
**dadurch gekennzeichnet, dass** die Werkzeugmaschine als Schleifmaschine ausgebildet ist.

## Claims

1. Machine tool for machining work pieces (22), with three numerically controlled linear axes, which are orthogonal to each other, that is to say a horizontal X-axis, a horizontal Y-axis and a vertical Z-axis, with a machine bed (10), which has, spaced apart in the X-axis, two vertical side walls (12) adjusted in an upward manner, with a movable bridge (28) guided above at the side walls (12) in the Y-axis, with a Z-slide arranged centrally in the bridge (28) with respect to the side walls (12), where the Z-slide is displaceable in the Z-axis and holds a tool spindle (46), with an X-guiding unit (14) arranged on the machine bed (10), with a work piece holding unit (16,18,20) displaceable on the X-guiding unit and with a tool retainer arranged on the tool spindle (46), **characterized in that** the axis of the tool spindle (46) bisects the Z-axis and **in that** the tool spindle (46) can be rotated numerically controlled about an axis (C-axis), coinciding with the Z-axis, for which the Z-slide (36) is mounted rotatably about this C-axis in the bridge (28).

2. Machine tool according to claim 1, **characterized in that** the side walls (12) each have an opening (24), through which the X-guiding unit (14) is passed.

3. Machine tool according to claim 1, **characterized in that** the Z-slide is arranged centrally in the bridge (28) also with respect to the Y-axis.

4. Machine tool according to anyone of the preceding claims, **characterized in that** the work piece (22) in the work piece holding unit (16, 18, 20) can be rotated numerically controlled about an A-axis coinciding with the X-axis.

5. Machine tool according to anyone of the preceding claims, **characterized in that** the tool spindle (46) is mounted rotatably about a horizontal B-axis, which lies in a plane orthogonal to the Z-axis.

6. Machine tool according to anyone of the preceding claims, **characterized in that** a tool (52) clamped in the tool retainer of the tool spindle (46) is arranged substantially in the Z-axis.

7. Machine tool according to claim 6, **characterized in that** the clear distance of the side walls (12) in the X-direction permits the tool spindle to rotate about the C-axis by 360°.

8. Machine tool according to anyone of the preceding claims, **characterized in that** the machine bed (10) and the side walls (12) form an integral mineral casting component.

9. Machine tool according to anyone of the preceding claims, **characterized in that** the machine tool is embodied as grinding machine.

## Revendications

1. Machine-outil pour usiner les pièces (22) comportant :
- trois axes linéaires orthogonaux à commande numérique à savoir l'axe (X) horizontal, un axe (Y) horizontal et un axe (Z) vertical,
- un plateau de machine (10) ayant deux parois latérales (12) verticales, montantes, écartées dans la direction de l'axe (X),
- un pont (28) guidé en haut des parois latérales (12) suivant l'axe (Y),
- un chariot (Z) installé par rapport aux parois latérales (12) au milieu du pont (28), ce chariot étant mobile suivant l'axe (Z) et il porte une broche d'outil (46),
- une unité de guidage en x (14) installée sur le plateau (10) de la machine,
- une installation de support de pièces (16, 18, 20) mobile sur l'unité de guidage dans la direction (X) et
- un porte-outil monté sur la broche d'outil (46),
**caractérisée en ce que**
l'axe de la broche d'outil (46) coupe l'axe (Z), et
la broche d'outil (46) peut tourner en commande numérique autour d'un axe (axe C) coïncidant avec l'axe (Z), et le chariot (Z) (36) est monté en rotation dans le pont (28) autour de cet axe (C).

2. °) Machine-outil selon la revendication 1,
**caractérisée en ce que**
les parois latérales (12) comportent chacune un passage (24) que peut traverser l'unité de guidage x (14).

3. °) Machine-outil selon la revendication 1,
**caractérisée en ce que**
le chariot (Z) est installé dans le pont (28) au milieu par rapport à l'axe (Y).

4. °) Machine-outil selon l'une des revendications précédentes,
**caractérisée en ce que**
la pièce (22) est commandée de manière numérique dans l'installation de support de pièce (16, 18, 20) de façon à tourner autour d'un axe (A) coïncidant avec l'axe (X).

5. °) Machine-outil selon l'une des revendications précédentes,
**caractérisée en ce que**
la broche d'outil (46) est montée de façon à basculer autour d'un axe horizontal (B) situé dans un plan orthogonal à l'axe (Z).

6. °) Machine-outil selon l'une des revendications précédentes,
**caractérisée en ce qu'**
un outil (52) serré dans le porte-outil de la broche d'outil (46) se trouve pratiquement sur l'axe (Z).

7. °) Machine-outil selon la revendication 6,
**caractérisée en ce que**
la distance libre des parois latérales (12) dans la direction (X) permet une rotation de la broche d'outil de 360° autour de l'axe (C).

8. °) Machine-outil selon l'une des revendications précédentes,
**caractérisée en ce que**
le plateau (10) de la machine et les parois latérales (12) sont réalisés en une seule pièce de fonte minérale.

9. °) Machine-outil selon l'une des revendications précédentes,
**caractérisée en ce que**
la machine-outil est une meuleuse.
